# EUROPÄISCHE PATENTSCHRIFT

(11) **EP 1 219 870 B1**
(45) Veröffentlichungstag und Bekanntmachung des Hinweises auf die Patenterteilung: **02.05.2003**
(21) Anmeldenummer: 02006967.0
(22) Anmeldetag: 13.12.1999
(51) Int. Cl.: F16H 61/12

(54) **Elektronisch-hydraulische Steuerung für Antriebssysteme von Fahrzeugen mit automatischem Gangwechsel**
Electronic-hydraulic control device for transmission systems of vehicles with automatic gear change
Dispositif de commande éléctronique-hydraulique pour système de transmission de véhicules automobiles à changement de vitesse automatique

(30) Priorität: 18.12.1998 DE 19858541
(43) Veröffentlichungstag der Anmeldung: 03.07.2002
(62) Teilanmeldung aus: 99965450.2
(73) Patentinhaber: ZF FRIEDRICHSHAFEN Aktiengesellschaft, 88038 Friedrichshafen (DE)
(72) Erfinder: Gierer, Georg, 88079 Kressbronn (DE); Schmidt, Thilo, 88074 Meckenbeuren (DE); Steinhauser, Klaus, 88079 Kressbronn (DE)

(56) Entgegenhaltungen:
- WO-A-84/00522
- WO-A-90/04732
- DE-A- 3 729 627

## Beschreibung

Die Erfindung bezieht sich auf eine elektronisch-hydraulische Steuereinrichtung eines automatisch schaltenden Kraftfahrzeug-Getriebes, bei welchem zur Schaltung einzelner Gangstufen hydraulisch ein- und ausrückbare Reibkupplungen bzw. Bremsen angesteuert werden, indem in Abhängigkeit von Betriebsparametern des Kraftfahrzeug-Getriebes und eines Antriebsmotors sowie Einrichtungen zur Schaltund/oder Fahrprogramm-Beeinflussung die Betätigungseinrichtungen von der elektronisch-hydraulischen Steuereinrichtung mit Druck beaufschlagt werden.

Eine elektronisch-hydraulische Steuereinrichtung eines automatisch schaltenden Kraftfahrzeug-Getriebes der vorgenannten Gattung ist aus der EP 0 440 748 B1 bekannt. In diesem Steuersystem ist jeder Betätigungseinrichtung ein Steuerventil zugeordnet und die Magnetventile und Schaltventile, welche zur Ansteuerung der Steuerventile genutzt werden, können Mehrfach-Funktionen übernehmen. Das Steuergerät dieser Getriebesteuerung weist eine Einrichtung zur Fehlerüberwachung auf, wobei beim Auftreten des Fehlersignals ein zugeordnetes Magnetventil oder Drucksteuerventil derart umgesteuert wird, daß sich das Kraftfahrzeug-Getriebe zumindest phasenweise im Leerlauf befindet. Für ein Kraftfahrzeug ist es notwendig, auch bei einem Defekt der elektronischen Steuerung weiterfahren zu können.

Der Erfindung liegt die Aufgabe zugrunde, eine elektronisch-hydraulische Getriebesteuerung für ein Getriebe mit automatischem Gangwechsel, vorzugsweise einem Sechsgang-Getriebe, weiterzuentwickeln, bei welcher die Kupplungen oder Bremsen des Getriebes über Mehrfachfunktionen von Magnetventilen und Steuerventilen elektro-hydraulisch ansteuerbar sind.

Diese Aufgabe wird mit einer, auch die kennzeichnenden Merkmale des Hauptanspruchs aufweisenden, gattungsgemäßen, elektronisch-hydraulischen Getriebesteuerung gelöst, bei welcher die Kupplungen oder Bremsen direkt von dem elektronischen Steuergerät ansteuerbar sind, indem elektrische Drucksteuerventile oder elektrische Magnetventile von dem elektronischen Steuergerät angesteuert werden und diese wiederum Hydraulikventile ansteuern, die abhängig von dem Ansteuerdruck der elektrischen Drucksteuerventile die Betätigungseinrichtungen der Kupplungen oder Bremsen mit Druck beaufschlagen.

Da diese elektronisch-hydraulische Getriebesteuerung vorzugsweise für ein Sechsgang-Automatgetriebe verwendet wird, sind die Steuerventile, welche die Kupplungen und Bremsen ansteuern, erfindungsgemäß so ausgelegt, daß sie zwei unterschiedliche Ventilkennlinien aufweisen. Dies ist notwendig, da bei einem Sechsgang-Automatgetriebe Kupplungen oder Bremsen in verschiedenen Gängen betätigt werden müssen, um in Kombination mit anderen Kupplungen oder Bremsen Gänge zu schalten. Somit wird eine Kupplung sowohl z. B. im dritten als auch im fünften Gang zum Einlegen der Gänge betätigt. Da jedoch das Drehmoment an der Kupplung in einem unteren Gang eine Differenz zu dem Drehmoment der gleichen Kupplung im oberen Gang aufweist, ist es notwendig, die Betätigungseinrichtung dieser Kupplung je nach geschaltetem Gang mit unterschiedlichen Drücken zu beaufschlagen. Es werden, je nach Gang-Kombination, die Steuerventile entweder nur von einer Fläche mit Druck beaufschlagt oder, wenn eine zweite Ventilkennlinie benötigt wird, die Steuerventile von einer weiteren Fläche mit Druck beaufschlagt, wobei die Fläche der einen druckbeaufschlagten Seite eine Differenz zur weiteren Fläche aufweist. Hierdurch wird bei gleichem Ansteuerdruck ein unterschiedlicher Kupplungsdruck erzeugt.

Weitere Ausgestaltungen der Erfindung sind der Figuren-Beschreibung zu entnehmen.

Es zeigen:

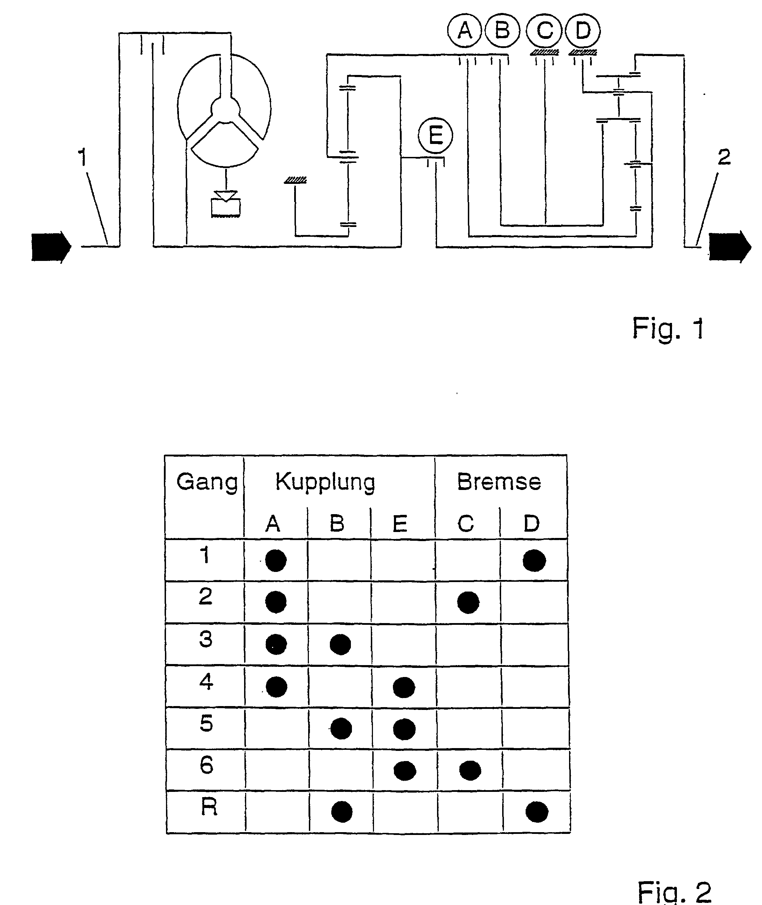

- Fig. 1: ein Getriebeschema eines Sechsgang-Getriebes;
- Fig. 2: eine Tabelle der in den einzelnen Gängen betätigten Reibkupplungen und Bremsen;
- Fig. 3: ein vereinfacht dargestelltes Steuerschema der erfindungsgemäßen Steuereinrichtung und
- Fig. 4: eine Tabelle, bei welcher die geschalteten Magnet- und elektrischen Drucksteuerventile zu jedem geschalteten Gang dargestellt sind.

### Fig. 1:

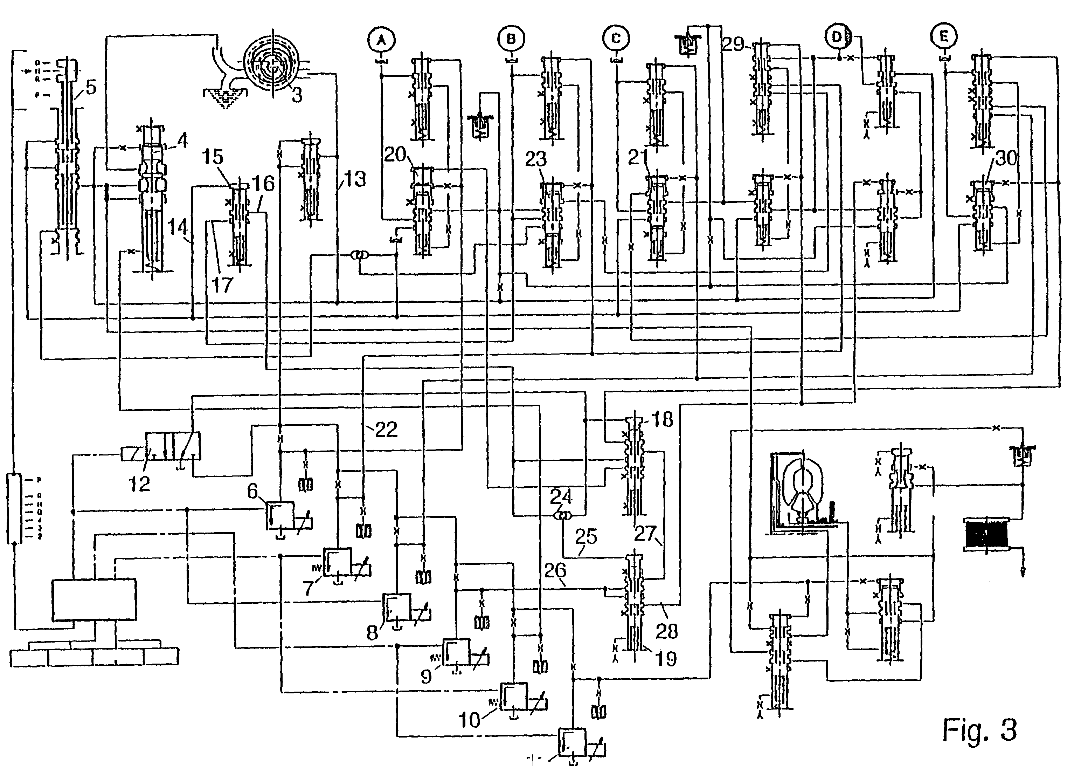

Das dargestellte Getriebeschema zeigt ein Sechsgang-Getriebe in Planetenbauweise, bei welchem die Antriebswelle 1 von einem nicht dargestellten Verbrennungsmotor angetrieben wird. Über die Kupplungen A, B, E und Bremsen C, D ist die Antriebswelle 1 mit der Abtriebswelle 2 verbindbar. Die geschalteten Kupplungen bzw. Bremsen zu den korrespondierenden Gängen sind Fig. 2 zu entnehmen.

### Fig. 2:

In der dargestellten Tabelle ist ersichtlich, welche Kupplungen bzw. Bremsen geschlossen sein müssen, um die bestimmten Gänge zu schalten.

### Fig. 3:

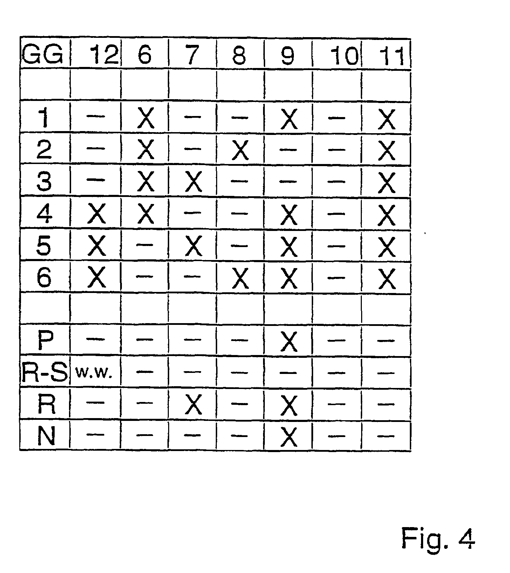

Von einem nicht dargestellten Verbrennungsmotor wird eine Pumpe 3 angetrieben, welche den Systemdruck für die elektro-hydraulische Getriebesteuerung liefert. Der Systemdruck wird von dem Systemdruckventil 4 eingeregelt. Wird der Wählschieber in eine Vorwärtsfahrtstellung verschoben, so werden, je nach Parameter des Verbrennungsmotors und des Automatgetriebes, die elektrischen Drucksteuerventile 6, 7, 8, 9, 10, 11 und Magnetventile 12, wie in der Tabelle in Fig. 4 ersichtlich, angesteuert. Ist z. B. der zweite Gang eingelegt, so versorgt die Pumpe 3 die Steuerung mit Druckmedium über einen Kanal 13, welches vom Systemdruckventil auf ein vorgegebenes Niveau eingesteuert wird. Über den Kanal 14 wird das Reversierventil 15 umgesteuert, dadurch wird der Kanal 16 mit dem Kanal 17 verbunden. Das elektronische Steuergerät überprüft, ob die Gangwahl zulässig ist und steuert dann die elektrischen Drucksteuerventile 6, 8 und 11 an. In diesem Zustand ist das Notfahr-Ventil 18 und das Schaltventil 19 in Ausgangsstellung. Das Steuerventil 20 wird umgesteuert und die Kupplung A geschlossen. Das Steuerventil 21 wird umgesteuert und die Bremse C geschlossen. Somit ist der zweite Gang eingelegt. Tritt nun in den Gängen eins bis drei eine Störung des elektronischen Steuergerätes auf, so werden die Magnetventile 12 und die elektrischen Drucksteuerventile 6, 7, 8, 9, 10, 11 stromlos geschaltet. Da das Drucksteuerventil 7 stromlos ist, wird das elektrische Drucksteuerventil 7 dergestalt von seiner Feder umgesteuert, daß das Steuerventil 23 über den Kanal 22 umgesteuert wird und die Kupplung B ungeregelt schließt. Da nach wie vor das Reversierventil 15 mit Druck beaufschlagt ist, ist der Kanal 17 mit dem Kanal 16 verbunden und der Druck, welcher auf die Betätigungseinrichtung der Kupplung B wirkt, wird über das Notfahrventil 18 zum Steuerventil 20 geleitet. Das Steuerventil 20 wird somit mit Druck beaufschlagt, so daß die Kupplung A geschlossen bleibt. Ebenso wird über den Kanal 16 das Ventil 24 umgesteuert und der Kanal 25 mit Druck beaufschlagt. Das Schaltventil 19 wird umgesteuert, so daß die Verbindung vom Kanal 26 auf den Kanal 27 umgestellt wird und somit der Kanal 28 drucklos wird, wodurch das Steuerventil 29 umsteuert und die Kupplung D drucklos geöffnet ist. Somit ist bei Ausfall des elektronischen Steuergeräts in den unteren Gängen gewährleistet, daß der dritte Gang bei einem Notfall automatisch eingelegt wird. Tritt ein Fehler des elektronischen Steuergeräts bei einem der eingelegten oberen Gänge auf, so werden ebenfalls die elektrischen Drucksteuerventile 6, 7, 8, 9, 10, 11 und die Magnetventile 12 stromlos geschaltet. Wie zuvor beschrieben, wird das elektrische Drucksteuerventil 7 über seine Feder umgesteuert und somit die Kupplung B geschlossen. Bei den eingelegten oberen Gängen 4, 5 und 6 ist das Magnetventil 12 bei normalem Betrieb des elektronischen Steuergerätes bestromt. Aus diesem Grund ist beim Eintreten des Fehlers beim elektronischen Steuergerät das Notfahrventil 18 noch gegen seine Feder verschoben. Da im stromlosen Zustand das elektrische Drucksteuerventil 9 so umgesteuert ist, daß der Kanal 26 mit Druck beaufschlagt ist und das Schaltventil 19 umgesteuert bleibt, da das Ventil 24 über das Reversierventil 15 umgesteuert wird, wirkt auf die Differenzfläche im Notfahrventil 18 der Druck von Kanal 26 und hält das Notfahrventil 18 in seiner unteren Stellung. Über den Kanal 27 und das Notfahrventil 18 wird das Steuerventil 30 umgesteuert, so daß die Kupplung E geschlossen bleibt. Somit ist gewährleistet, daß bei einem Fehler des elektronischen Steuergerätes bei einem eingestellten oberen Gang automatisch in den fünften Gang geschaltet wird. Wird das Fahrzeug nun in diesem geschalteten fünften Notgang bis zum Stillstand abgebremst, ist es unter bestimmten Bedingungen nicht mehr möglich, im fünften Gang genügend Drehmoment zu erzeugen, um Anfahren zu können. Aus diesem Grund muß der Systemdruck für kurze Zeit unterbrochen werden, welches durch Abschalten des Verbrennungsmotors oder durch manuelles Umschalten eines weiteren Ventils geschehen kann. Dabei geht das Notfahrventil 18 in seine Ausgangsstellung und bei einem Neustart des Motors und dem Einlegen der Fahrposition wird nun wieder automatisch der dritte Gang eingelegt.

Erfindungsgemäß sind die Steuerventile, welche den Kupplungen und Bremsen zugeordnet sind, von beiden Seiten mit Druck beaufschlagbar, jedoch weisen sie auf den beiden Seiten unterschiedliche Flächen auf, somit ist es möglich, durch einerseits Druckbeaufschlagen einer Fläche eine erste Ventilkennlinie zu realisieren und andererseits durch Druckbeaufschlagen einer zweiten Fläche und einer ersten Fläche eine zweite Ventilkennlinie zu realisieren. Dies ist notwendig, da bestimmte Kupplungen oder Bremsen in mehreren Gängen benützt werden, z. B. wird die Kupplung C in den Gängen zwei und sechs beaufschlagt.

### Bezugszeichen

- 1: Antriebswelle
- 2: Abtriebswelle
- 3: Pumpe
- 4: Systemdruck-Ventil
- 5: Wählschieber
- 6: elektrisches Drucksteuerventil
- 7: elektrisches Drucksteuerventil
- 8: elektrisches Drucksteuerventil
- 9: elektrisches Drucksteuerventil
- 10: elektrisches Drucksteuerventil
- 11: elektrisches Drucksteuerventil
- 12: Magnetventil
- 13: Kanal
- 14: Kanal
- 15: Reversierventil
- 16: Kanal
- 17: Kanal
- 18: Notfahrventil
- 19: Schaltventil
- 20: Steuerventil
- 21: Steuerventil
- 22: Kanal
- 23: Steuerventil
- 24: Ventil
- 25: Kanal
- 26: Kanal
- 27: Kanal
- 28: Kanal
- 29: Steuerventil
- 30: Steuerventil

- A: Kupplung
- B: Kupplung
- C: Bremse
- D: Bremse
- E: Kupplung

## Patentansprüche

1. Elektronisch-hydraulische Steuereinrichtung eines automatisch schaltenden Kraftfahrzeug-Getriebes mit zur Schaltung einzelner Gangstufen dienenden, hydraulisch einund ausrückbaren Reibkupplungen bzw. Bremsen (A, B, C, D, E), deren Betätigungseinrichtungen jeweils ein Steuerventil (20, 21, 23, 30) zugeordnet ist, mit einem als Mikroprozessor ausgebildeten Steuergerät, mittels welchem, in Abhängigkeit von Betriebsparametern des Kraftfahrzeug-Getriebes und eines Antriebsmotors sowie einer Einrichtung zur Schalt- und/oder Fahrprogramm-Beeinflussung die Betätigungseinrichtung beherrschende, elektrisch betätigte Magnetventile (12) und Drucksteuerventile (6, 7, 8, 9, 10, 11) verstellbar sind, **dadurch gekennzeichnet , daß** Steuerventile (20, 21, 23) in ihren Abmessungen verschiedene druckbeaufschlagbare Flächen aufweisen, deren Kraft im druckbeaufschlagten Zustand einander addieren.

2. Elektronisch-hydraulische Steuereinrichtung nach Anspruch 1, **dadurch gekennzeichnet, daß** beide druckbeaufschlagbaren Flächen von Steuerventilen angesteuert werden, wenn die dem Steuerventil (20, 21, 23) nachgeschaltete Kupplung oder Bremse (A, B, C, D, E) an einer Schaltung eines höheren Gangs beteiligt ist und nur eine druckbeaufschlagbare Fläche von Steuerventilen angesteuert wird, wenn die dem Steuerventil (20, 21, 23) nachgeschaltete Kupplung oder Bremse (A, B, C, D, E) an einer Schaltung eines niedrigeren Ganges beteiligt ist.

## Claims

1. Electronic-hydraulic control equipment of an automatically changing vehicle transmission with hydraulically engageable and disengageable friction couplings or brakes (A, B, C, D, E) for changing individual gear stages, a control valve (20, 21, 23, 30) being associated in each case with the actuation devices for the couplings or brakes, with a control unit formed as a microprocessor, by means of which electrically actuated magnetic valves (12) and pressure control valves (6, 7, 8, 9, 10, 11) controlling the actuation device can be adjusted depending on operating parameters of the vehicle transmission and a drive motor as well as a device for influencing the gear change program and/or drive program, **characterised in that** control valves (20, 21, 23) have in their dimensions various surfaces that can be subjected to pressure, whose forces are summated in the pressure-subjected state.

2. Electronic-hydraulic control equipment according to claim 1, **characterised in that** both surfaces of control valves that can be subjected to pressure are controlled if the coupling or brake (A, B, C, D, E) upstream of the control valve (20, 21, 23) is involved in a change to a higher gear, and only one surface of control valves that can be subjected to pressure is controlled if the coupling or brake (A, B, C, D, E) upstream of the control valve (20, 21, 23) is involved in a change to a lower gear.

## Revendications

1. Dispositif de commande électronique-hydraulique pour une transmission de véhicule automobile à passage automatique des vitesses, comprenant des embrayages à friction et freins (A, B, C, D, E) à serrage et desserrage hydraulique, servant au passage des étages de vitesse, aux dispositifs d'actionnement desquels sont respectivement associées des vannes de commande (20, 21, 23, 30), et un appareil de commande constitué par un microprocesseur au moyen duquel des électrovannes (12) et des vannes de commande de pression (6, 7, 8, 9, 10, 11) à actionnement électrique, qui contrôlent le dispositif d'actionnement, peuvent être réglées en fonction de paramètres de fonctionnement de la transmission du véhicule et d'un moteur d'entraînement, ainsi que d'un dispositif destiné à influencer le programme de passage des vitesses et/ou de conduite, **caractérisé en ce que** les vannes de commande (20, 21, 23) comportent des surfaces pouvant être sollicitées par une pression, ayant différentes dimensions, dont les forces s'additionnent mutuellement dans l'état sollicité par la pression.

2. Dispositif de commande électronique-hydraulique selon la revendication 1, **caractérisé en ce que** les deux surfaces de vannes de commande pouvant être sollicitées par une pression sont attaquées lorsque l'embrayage ou frein (A, B, C, D, E) placé en aval de la vanne de commande (20, 21, 23) participe au passage d'une vitesse supérieure et seule une surface de vannes de commande pouvant être sollicitée par une pression est attaquée lorsque l'embrayage ou frein (A, B, C, D, E), placé en aval de la vanne de commande (20, 21, 23), participe au passage d'une vitesse inférieure.
